# EUROPEAN PATENT APPLICATION

(11) **EP 1 939 658 A2**
(43) Date of publication of application: **02.07.2008**
(21) Application number: 07022974.5
(22) Date of filing: 27.11.2007
(51) Int. Cl.: G02B 6/28, G02B 6/44

(54) **Overpackaging and routing apparatus for optical fiber power splitter devices**

(30) Priority: 27.12.2006 US 645990
(71) Applicant: Furukawa Electric North America Inc. (a Delaware Corporation), Norcross GA 30071 (US)
(72) Inventor: Hendrickson, Daniel, Georgia 30076 (US); Zhang, Hongbo, Duluth Georgia 30097 (US)
(74) Representative: Schoppe, Fritz

(57) **Abstract**

Embodiments of the invention include an apparatus for overpackaging and routing of optical fiber power splitting devices, such as planar lightwave circuit (PLC) devices. The apparatus includes an overpackage housing with a first end configured as an optical fiber for coupling to the input port of a planar waveguide element positioned within the overpackage housing, and a second end configured for coupling to a plurality of output ports of the planar lightwave element. The apparatus also includes one or more transition blocks coupled to the second end of the overpackage housing. The transition block can be integral with or coupled to the second end of the overpackage housing directly, or via one or more fibers or multi-fiber groups. The transition block transitions the second end of the overpackage housing to individual optical fibers. The transition block also can pre-arrange the fibers to bend or route within a fiber management system.

## Description

### BACKGROUND OF THE INVENTION

### Field of Invention

The invention relates to optical fiber power splitting devices. More particularly, the invention relates to apparatus for overpackaging, transitioning and routing of optical fiber power splitting devices.

### Description of Related Art

One of the more important recent developments in the field of fiber optic communications is the emergence of the feasibility of fiber management and distribution systems, arrangements and devices for delivering optical fiber signals to a particular location or group of locations. Such applications typically are referred to as Fiber to the x (FTTx) applications. One of the more popular FTTx applications is Fiber to the Premises (FTTP) or Fiber To The Home (FTTH), in which optical signal capabilities are routed from a central office or other distribution location to a plurality of homes in that particular location via optical fiber and one or more optical connectors and/or other optical connection devices.

The emergence of FTTx applications is driving a need for the improved management of optical fiber power splitting devices that service such passive optical networks (PONs), which are systems that bring optical fiber cabling and signals either completely or almost completely to the system end users. Conventionally, many FTTx applications use planar lightwave circuit (PLC) technology in various packaging structures. Typically, these packaging structures include a splitter housing that contains the PLC chip, which is a planar waveguide structure that splits the power of an optical fiber signal into a plurality of optical fiber signals. The splitter housing splits a single optical fiber into a plurality of individual fiber pigtails emanating from the splitter housing. The fiber pigtails, which each typically are approximately 4 to 6 feet in length, are used to administer various fiber routing assignments within a fiber distribution location and/or between locations (e.g., outside plant administration points).

Optical splitter modules often are used to protect PLC splitter housings and at least a portion of the fiber pigtails. An optical splitter module typically is a sheet metal housing dimensioned to contain the PLC splitter housing and the fiber pigtails. Alternatively, conventional optical splitter modules include a sheet metal housing with an exit port through which the fiber pigtails exit. Some conventional optical splitter modules also can include connector ports that can serve as a relatively organized means for storing fiber slack and for preparing the fiber pigtails for connectorization.

However, there exists a growing need within PON design to reduce the size and improve the fiber management and routing aspects of conventional optical splitter modules and fiber splitter routing in general. Also, there exists a desire to eliminate all or a portion of the connectorization used in association with conventional optical splitter modules. Accordingly, it would be desirable to have available fiber management and routing solutions for PLC splitter devices that address such needs and desires.

### SUMMARY OF THE INVENTION

The invention is embodied in an apparatus for overpackaging and routing of optical fiber power splitting devices, such as planar lightwave circuit (PLC) devices. The apparatus includes an overpackage housing with a first end configured as an optical fiber for coupling to the input port of a planar waveguide element positioned within the overpackage housing, and a second end configured for coupling to a plurality of output ports of the planar lightwave element. The apparatus also includes one or more transition blocks coupled to the second end of the overpackage housing. The transition block can be integral with or coupled to the second end of the overpackage housing directly, or via one or more fibers or multi-fiber groups. The transition block transitions the second end of the overpackage housing to a plurality of individual optical fibers. The transition block also can include an integrated fiber direction device that can pre-arrange the plurality of fibers to bend or route within a fiber management system, without the need of external devices.

### BRIEF DESCRIPTION OF THE DRAWINGS

FIG. 1 is a simplified view of a conventional planar light circuit (PLC) optical fiber power splitter device;

FIG. 2 is a simplified, perspective view of a PLC overpackaging apparatus according to an embodiment of the invention;

FIG. 3 is a simplified, perspective view of a PLC overpackaging apparatus, including fiber routing, according to another embodiment of the invention; and

FIG. 4 is a simplified, perspective view of a PLC overpackaging apparatus, including fiber routing, according to yet another embodiment of the invention.

### DETAILED DESCRIPTION OF EXEMPLARY EMBODIMENTS

In the following description like reference numerals indicate like components to enhance the understanding of the invention through the description of the drawings. Also, although specific features, configurations and arrangements are discussed hereinbelow, it should be understood that such is done for illustrative purposes only. A person skilled in the relevant art will recognize that other steps, configurations and arrangements are useful without departing from the spirit and scope of the invention.

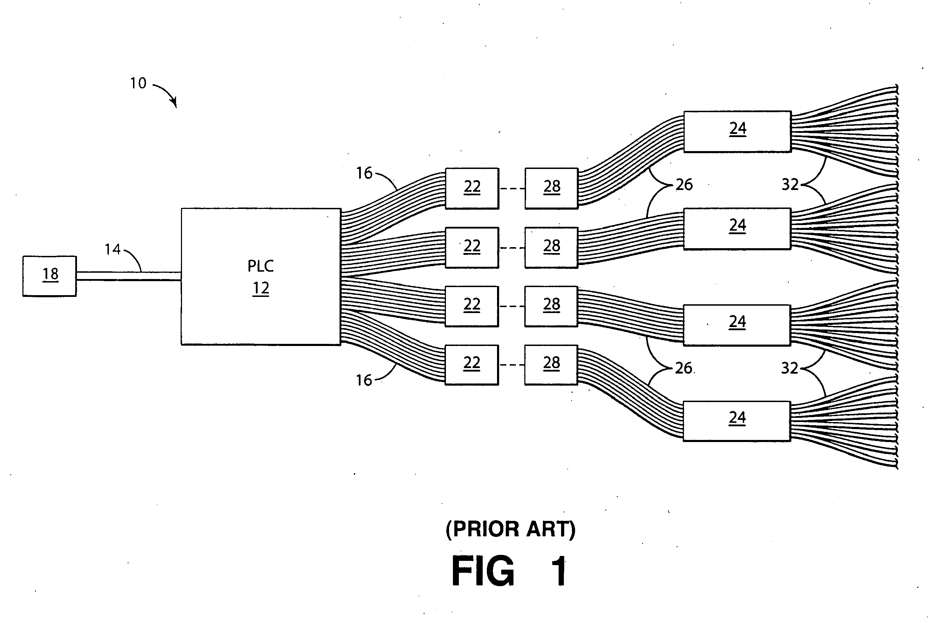

Referring now to FIG. 1, shown is a simplified, perspective view of a conventional planar light circuit (PLC) optical fiber power splitter device 10. The splitter device 10 includes a device housing 12, such as a planar light circuit (PLC) housing, with a first or input end 14, configured as at least one single optical fiber, and a second or output end 16, configured as a plurality of multi-fiber groups, such as a plurality of multi-fiber ribbons or ribbon cables.

The first or input end 14 can include an input connector 18, such as an LC connector, for connecting the optical fiber to an input port, such as an LC adapter. The second or output end 16 can include one or more output connectors 22, such as a plurality of MPO connectors, for coupling the multi-fiber ribbons or ribbon cables to a corresponding plurality of output ports, such as a plurality of MPO adapters. For example, the splitter device 10 can be a 1 x32 PLC splitter device having a single input end 14 coupled to an LC connector and four (4) 8-fiber ribbons each coupled to an 8-fiber MPO connector 22. The splitter device 10 is suitable for use within any suitable optical fiber power splitter module, such as the optical fiber power splitter module apparatus disclosed in detail in co-pending application Serial No. 11/041,816 (Atty. Docket No. Feustel 5-1-1), filed on January 24, 2005 and assigned to the assignee of this application.

The splitter device 10 can include or be coupled to one or more transition blocks 24, which transition the multi-fiber ribbon cables 16 to a plurality of individual optical fibers. Each transition block 24 can include a first, multi-fiber end 26 terminated by a multi-fiber MPO connector or adapter 28 that couples to one of the multi-fiber connectors 22. Also, each transition block 24 can include a second end 32 that includes a plurality of individual optical fibers. For example, a 1 x32 PLC splitter device can include or be coupled to four transition blocks, with each transition block having an 8-fiber ribbon cable for coupling to one of the MPO connectors 22, e.g., via an appropriate MPO connector or adapter 28, that transitions into eight individual optical fibers 32.

As discussed hereinabove, passive optical network (PON) design and associated Fiber to the x (FTTx) applications include a growing need to reduce the size, complexity and/or interconnectibility required by optical fiber power splitter devices. Such need includes optical fiber power splitter devices that may be used with and/or without optical fiber power splitter modules.

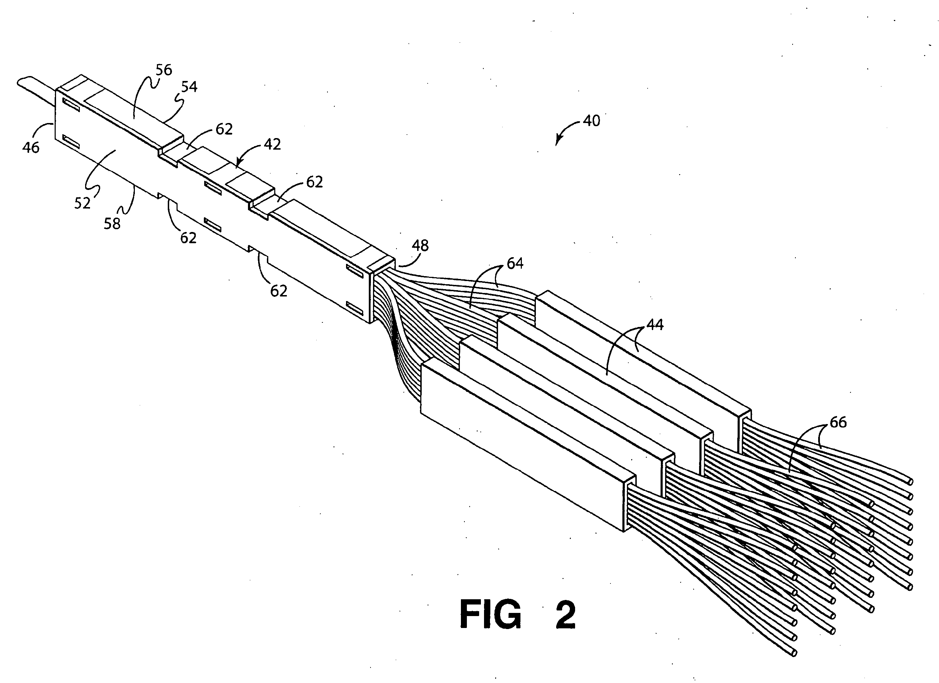

Referring now to FIG. 2, shown is a simplified, perspective view of a PLC overpackaging apparatus 40 according to an embodiment of the invention. The overpackaging apparatus 40 includes an overpackage housing 42, such as a planar light circuit (PLC) housing, and one or more transition blocks 44 coupled to the overpackage housing 42. The overpackage housing 42 is dimensioned to house a planar lightwave element, such as a 1xN PLC optical power splitter. The planar lightwave element typically is fixably formed within the overpackage housing 42, e.g., using epoxy or other suitable means for positioning the planar lightwave element within the overpackage housing 42.

The overpackage housing 42 includes a first or input end 46 configured to couple to an input waveguide or port of the planar lightwave element within the overpackage housing 42. The overpackage housing 42 also includes a second or output end 48 configured to couple to an output waveguide or port of the planar lightwave element within the overpackage housing 42. The input end 46 can be configured as an optical fiber. The output end 48 can be configured as a plurality of multi-fiber groups, such as a plurality of multi-fiber ribbons or ribbon cables. Alternatively, one or both of the ends 46, 48 can be configured as any suitable optical port, e.g., a port that connects to an optical fiber with or without an optical fiber connector. The configuration of the overpackage housing 42 allows for direct routing of the fibers from the PLC housing, with no requirement to bend or route fibers within the package. Also, unlike conventional configurations, there is no fiber slack and thus no need to provide fiber slack storage within the apparatus 40.

The overpackage housing 42 can be made of any suitable material, such as molded plastic, steel tubing or sheet metal. Although the overpackage housing 42 can be any suitable shape for housing a PLC element, the overpackage housing 42 generally has a top side surface 52, a bottom side surface 54, a first side surface 56 and a second side surface 58. One or more of the side surfaces can have one or more latching formations 62 formed therein to allow the overpackage housing 42 to be fixably positioned, e.g., snap-fit, inside various optical power splitting modules and other housings in which the overpackage housing 42 may be positioned.

At the output end 48 of the overpackage housing 42, the multi-fiber groups are coupled to a corresponding plurality of the transition blocks 44. For example, each transition block 44 transitions one multi-fiber group, such as a multi-fiber ribbon 64, into a corresponding plurality of optical fibers 66. Unlike conventional splitter device arrangements, such as the conventional device 10 shown in FIG. 1, in the PLC overpackaging apparatus 40, the overpackage housing 42 and the transition blocks 44 are coupled together directly, e.g., via one or more multi-fiber ribbons 64. Thus, in this manner, the PLC overpackaging apparatus 40 eliminates the need for connectors and/or adapters between the output end 48 of the overpackage housing 42 and the transition blocks 44.

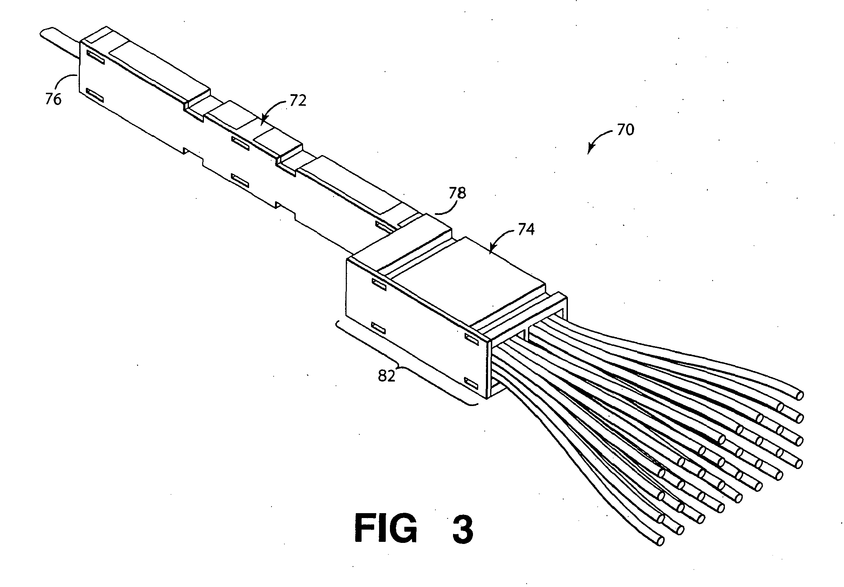

Referring now to FIG. 3, shown is a simplified, perspective view of a PLC overpackaging apparatus 70 according to another embodiment of the invention. The overpackaging apparatus 70 includes an overpackage housing 72, similar to the overpackage housing 42 shown in FIG. 2. However, in the overpackaging apparatus 70, a single transition block 74 is coupled directly to the output end of the overpackage housing 72. Alternatively, the overpackage housing 72 is formed as a single piece that includes the transition block 74 as an integral portion of the overpackage housing 72.

In this manner, the overpackaging apparatus 70 is configured and functions as a single body with a first or input end 76, which can be configured as an optical fiber, and an output end 78, which can be configured as or coupled to a plurality of optical fibers, e.g., that correspond to the number of output waveguide ports of the PLC element within the overpackage housing 72. Alternatively, the output end 78 can be configured as one or more multi-fiber groups that correspond to the number of output waveguide ports of the PLC element within the overpackage housing 72. However, the overpackaging apparatus 70 does not have any multi-fiber groups between the overpackage housing 72 and the transition block 74. In this manner, the overall structure of the overpackaging apparatus 70 is simplified.

The transition block 74 can be configured in such a way that at least a portion of the plurality of optical fibers exiting the output end 78 of the overpackaging apparatus 70 are routed or directed in a particular direction. For example, the transition block 74 can include a shaped portion 82 that monotonically pre-arranges or directs the optical fibers in a particular direction. The routing direction can depend on the likely orientation of the overpackaging apparatus 70 within an overall fiber management system. Such routing configuration is advantageous in arrangements in which the overpackaging apparatus 70 is contained within a splitter module or other housing. It allows the plurality of fibers to be bent or routed within a fiber management system without the need of external devices. It should be understood that a portion of input end 76 of the overpackaging apparatus 70 also can be configured to route the input fiber in a particular direction.

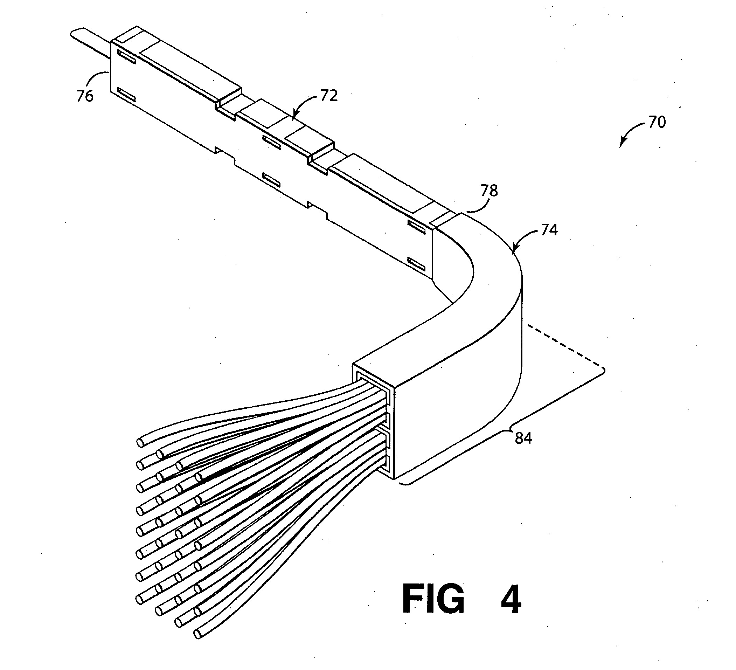

Alternatively, as shown in FIG. 4, in yet another embodiment of the invention, the overpackaging apparatus 70 includes one or more bend radius elements or bend radius control elements 84 coupled to the transition block 74. Each bend radius element 84 is configured to route at least a portion of the fibers exiting the output end 78 of the overpackaging apparatus 70 in a particular direction. It should be understood that one or more bend radius elements 84 also can be coupled to the input end 76 of the overpackaging apparatus 70 to route the input fiber in a particular direction.

It will be apparent to those skilled in the art that many changes and substitutions can be made to the embodiments of the invention herein described without departing from the spirit and scope of the invention as defined by the appended claims and their full scope of equivalents.

## Claims

1. An overpackaging apparatus for splitting optical power, the apparatus comprising:
an overpackage housing having a first end configured as an optical fiber for coupling to an input waveguide of a planar lightwave element and a second end configured for coupling to a plurality of output waveguides of the planar lightwave element; and
at least one transition block coupled to the second end of the overpackage housing for transitioning the second end of the overpackage housing to a plurality of optical fibers.

2. The apparatus as recited in claim 1, wherein the transition block has a first end formed integral with the second end of the overpackage housing and a second end configured as a plurality of optical fibers corresponding to the number of output waveguides of the planar lightwave element.

3. The apparatus as recited in claim 1, wherein the transition block is coupled to the second end of the overpackage housing via at least one multi-fiber ribbon.

4. The apparatus as recited in claim 1, wherein the transition block has a first end configured as at least one multi-fiber group of optical fibers for coupling to the second end of the overpackage housing and a second end configured as a plurality of individual optical fibers corresponding to the at least one multi-fiber group of optical fibers.

5. The apparatus as recited in claim 1, wherein at least a portion of the transition block is shaped to route at least a portion of the plurality of optical fibers in a first direction.

6. The apparatus as recited in claim 5, wherein the shaped portion of the transition block is monotonic.

7. The apparatus as recited in claim 1, further comprising at least one bend radius element coupled to the transition block for routing at least a portion of the plurality of optical fibers in a first direction.

8. The apparatus as recited in claim 1, wherein the first end of the overpackage housing includes a bend radius element for routing the optical fiber in a first direction.

9. The apparatus as recited in claim 1, wherein the overpackage housing includes at least one latching formation formed therein for fixably positioning the overpackage housing within an optical power splitting module.

10. The apparatus as recited in claim 1, wherein the planar lightwave element further comprises a 1 xN fiber planar lightwave circuit (PLC) splitter.

11. The apparatus as recited in claim 1, wherein the overpackage housing is dimensioned to receive therein the planar lightwave element.

12. The apparatus as recited in claim 1, further comprising a planar lightwave element formed within the overpackage housing.

13. The apparatus as recited in claim 1, further comprising a planar lightwave element epoxied within the overpackage housing.

14. The apparatus as recited in claim 1, wherein at least a portion of at least one of the overpackage housing and the transition block is made of molded plastic.
